# FASCICULE DE BREVET EUROPEEN

(11) **EP 2 926 237 B1**
(45) Date de publication et mention de la délivrance du brevet: **04.08.2021**
(21) Numéro de dépôt: 13802005.2
(22) Date de dépôt: 28.11.2013
(51) Int. Cl.: G06F 3/0488, G09B 21/00, G07F 19/00

(54) **PROCEDE DE CONTROLE D'UN AUTOMATE DE DISTRIBUTION OU DE COMMANDE ET AUTOMATE DE DISTRIBUTION OU DE COMMANDE ASSOCIE**
VERFAHREN ZUR STEUERUNG EINER AUTOMATISCHEN VERTEILUNGS- ODER BEFEHLSMASCHINE UND ZUGEHÖRIGE AUTOMATISCHE VERTEILUNGS- ODER BEFEHLSMASCHINE
METHOD FOR CONTROLLING AN AUTOMATIC DISTRIBUTION OR COMMAND MACHINE, AND ASSOCIATED AUTOMATIC DISTRIBUTION OR COMMAND MACHINE

(30) Priorité: 29.11.2012 FR 1203231
(43) Date de publication de la demande: 07.10.2015
(73) Titulaire: Revenue Collection Systems France SAS, 91220 Plessis-Pâté (FR)
(72) Inventeur: WARNITZ, Philippe, 91229 Bretigny Sur Orge Cedex (FR)
(74) Mandataire: Lavoix
(86) Numéro de dépôt international: PCT/EP2013/074973
(87) Numéro de publication internationale: WO 2014/083108

(56) Documents cités:
- US-A1- 2005 043 954
- US-A1- 2006 242 331
- US-B1- 7 051 096
- "CALCULATOR FOR THE VISUALLY IMPAIRED", IBM TECHNICAL DISCLOSURE BULLETIN, INTERNATIONAL BUSINESS MACHINES CORP. (THORNWOOD), US, vol. 37, no. 1, 1 janvier 1994 (1994-01-01), page 141, XP000428723, ISSN: 0018-8689

## Description

La présente invention concerne un procédé de contrôle d'un automate de distribution ou de commande. L'invention concerne également un automate de distribution ou de commande.

Les automates de distribution permettent d'automatiser et d'accélérer la distribution d'un produit ou d'un service à un utilisateur tandis que les automates de commande permettent d'automatiser et d'accélérer la commande d'un produit ou d'un service par un utilisateur. Par exemple, la fourniture de tickets de transport est plus rapide par un automate de distribution que par le biais d'un opérateur au guichet.

Le service proposé par un automate de distribution ou de commande possédant une interface graphique suppose que l'utilisateur puisse accéder aux touches de l'automate et voir le résultat de l'appui sur ces touches.

Les utilisateurs malvoyants ou non-voyants ne peuvent donc pas bénéficier de l'accélération de la distribution ou la commande que procurent les automates de distribution ou de commande.

Le document US7051096 B1 décrit un procédé et un système pour fournir des terminaux de transaction en libre-service globaux ou des guichets automatiques, qui sont pourvus d'une interface à écran tactile et d'une interface pour les personnes malvoyantes.

Il existe donc un besoin pour un automate de distribution ou de commande muni d'une interface graphique qui soit accessible à la fois aux utilisateurs normaux et aux utilisateurs malvoyants ou non-voyants.

A cet effet, il est proposé un procédé de contrôle d'un automate de distribution ou de commande tel que défini dans la revendication 1.

Suivant des modes de réalisation particuliers, le procédé comprend une ou plusieurs des caractéristiques des revendications 2 à 11, prise(s) isolément ou suivant toutes les combinaisons techniquement possibles.

Il est également proposé un automate de distribution ou de commande tel que défini dans la revendication 12.

D'autres caractéristiques et avantages de l'invention apparaîtront à la lecture de la description détaillée qui suit des modes de réalisation de l'invention, donnés à titre d'exemple uniquement et en référence aux dessins qui sont :
- figure 1, une vue schématique d'une partie d'un automate de distribution selon l'invention, l'interface graphique étant dans le premier mode de contrôle, et
- figure 2, une vue schématique de la partie de l'automate de distribution de la figure 1, l'interface graphique étant dans le deuxième mode de contrôle.

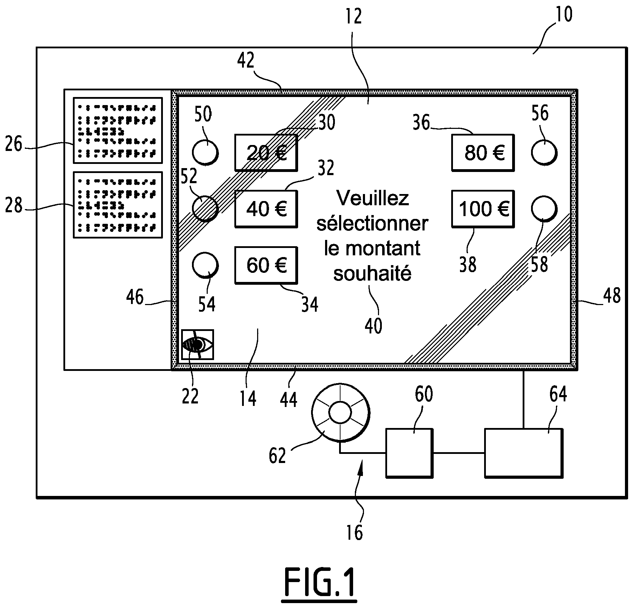

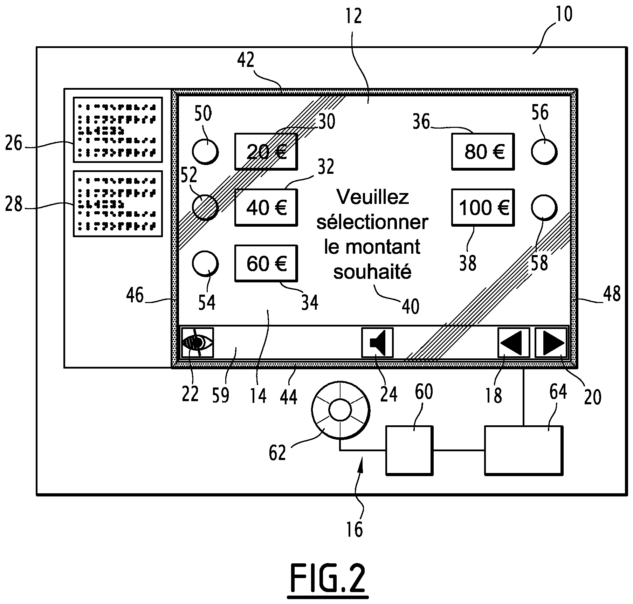

L'automate 10 de distribution représenté aux figures 1 et 2 est, par exemple, un distributeur automatique de billets d'une agence bancaire.

L'automate 10 distribue ainsi un service dans un lieu public.

En variante, l'automate 10 de distribution est propre à être utilisé pour la vente de billets ou de titres de transport.

Selon une autre variante, l'automate 10 est un automate de commande permettant par exemple de commander un service (menu notamment) dans un restaurant.

L'automate 10 comprend une interface graphique 12, un écran 14 propre à afficher la fenêtre en cours de l'interface graphique 12, un moyen de production 16 d'éléments sonores, quatre moyens auxiliaires de commande sous la forme de quatre touches 18, 20, 22 et 24 et deux marquages 26 et 28.

En informatique, une interface graphique telle que l'interface graphique 12 comprend des éléments graphiques qui permettent à l'utilisateur de dialoguer et de contrôler l'automate 10 pour que ce dernier effectue les actions souhaitées.

Un élément graphique est habituellement représenté par l'un des objets suivants :
- les éléments d'affichage simple comprenant notamment les objets suivants:
   ∘ étiquette (aussi désignée sous le terme « label »),
   ∘ icône,
- les boutons comprenant notamment les objets suivants:
   ∘ bouton poussoir (aussi désigné sous le terme anglais « button »),
   ∘ case à cocher (aussi désignée sous le terme anglais « check box »),
   ∘ bouton radio (aussi désigné sous le terme anglais « radio button »),
- les menus comprenant notamment les objets suivants:
   ∘ menu de commande (aussi désigné sous le terme anglais « command menu »),
   ∘ menu circulaire (aussi désigné sous le terme anglais « pie menu »),
- les conteneurs comprenant notamment les objets suivants:
   ∘ formes (aussi désignées sous le terme anglais « form »),
   ∘ cadre (aussi désigné sous le terme anglais « frame »),
   ∘ onglet (aussi désigné sous le terme anglais « tab »),
   ∘ barre d'outils (aussi désignée sous le terme anglais « toolbar »),
   ∘ barre de défilement (aussi désignée sous le terme anglais « scrollbar»),
- les listes comprenant notamment les objets suivants:
   ∘ liste à choix simple (aussi désignée sous le terme anglais « single choice list »),
   ∘ liste à choix multiple (aussi désignée sous le terme anglais « multiple choice list »),
- les champs ou aides utilisateur comprenant notamment les objets suivants:
   ∘ zone de texte (aussi désignée sous les termes anglais « text box » ou « edit field »),
   ∘ zone de mot de passe (aussi désignée sous le terme anglais « password field »),
   ∘ zone de sélection numérique (aussi désignée sous le terme anglais « spin box »),
   ∘ curseur (aussi désignée sous le terme anglais « slider »),
   ∘ barre de progression (aussi désignée sous le terme anglais « progress bar »),
- les fenêtres comprenant notamment les objets suivants:
   ∘ fenêtre simple,
   ∘ fenêtre modale (aussi désignée sous le terme anglais « modal window »),
   ∘ boîte de dialoque (aussi désignée sous le terme anglais « dialog box »),
   ∘ fenêtre flottante (aussi désignée sous le terme anglais « utility window »),
- les liens hypertextes.

En variante, les éléments graphiques sont composés de plusieurs éléments graphiques plus simples comme dans le cas d'un calendrier ou d'une boite combinée aussi désignée sous le terme « combobox ».

Pour des raisons de simplicité, dans la suite, les exemples d'interface graphique 12 se limitent à des boutons poussoirs.

En informatique, une interface graphique 12 (souvent désignée sous l'acronyme anglais de « GUI » pour Graphical User Interface) est un ensemble de fenêtres de dialogue homme-machine permettant à l'utilisateur de contrôler l'automate 10 pour que l'automate 10 effectue les actions souhaitées par l'utilisateur.

L'interface graphique 12 est propre à fonctionner selon un premier mode M1 de contrôle (cas de la figure 1) et un deuxième mode M2 de contrôle avec émission d'éléments sonores (cas de la figure 2).

Chaque fenêtre de l'interface graphique 12 comporte des éléments d'affichage et au moins deux éléments graphiques sélectionnables. Dans la suite, les éléments graphiques sélectionnables sont simplement désignés comme des éléments graphiques.

La sélection d'un élément graphique permet d'activer une fonctionnalité de l'automate 10 associée à l'élément graphique.

Selon l'exemple de la figure 1, la fenêtre en cours comprend cinq éléments graphiques 30, 32, 34, 36 et 38 dont la sélection permet d'activer une fonctionnalité et un élément d'affichage 40.

Chaque élément graphique 30, 32, 34, 36 et 38 se présente sous la forme d'un rectangle avec une somme en euros inscrite dedans. La somme inscrite est de 20 euros pour le premier élément graphique 30, 40 euros pour le deuxième élément graphique 32, 60 euros pour le troisième élément graphique 34, 80 euros pour le quatrième élément graphique 36 et 100 euros pour le cinquième élément graphique 38.

La sélection d'un élément graphique 30, 32, 34, 36, 38 permet à l'utilisateur de demander à l'automate 10 la somme en euros indiquée en billets par l'élément graphique 30, 32, 34, 36, 38.

L'élément non sélectionnable 40 affiche une instruction pour l'utilisateur à l'écran 14 : « Veuillez sélectionner le montant souhaité ».

L'écran 14 est un écran 14 tactile.

L'écran 14 a la forme d'un rectangle délimité par quatre bords : un bord supérieur 42, un bord inférieur 44 et deux bords latéraux 46, 48. Le bord latéral 46 gauche est le bord latéral qui se trouve à la gauche de l'utilisateur regardant l'écran 14 et le bord latéral 48 droit est le bord latéral qui se trouve à la droite de l'utilisateur regardant l'écran 14.

L'automate 10 de distribution comprend cinq moyens de sélection 50, 52, 54, 56, 58 des éléments graphiques 30, 32, 34, 36, 38.

Chaque moyen de sélection 50, 52, 54, 56, 58 est associé respectivement à un élément graphique 30, 32, 34, 36, 38 différent : le premier moyen de sélection 50 au premier élément graphique 30, le deuxième moyen de sélection 52 au deuxième élément graphique 32, le troisième moyen de sélection 54 au troisième élément graphique 34, le quatrième moyen de sélection 56 au quatrième élément graphique 36 et le cinquième moyen de sélection 58 au cinquième élément graphique 38.

Selon l'exemple de la figure 1, chaque moyen de sélection 50, 52, 54, 56, 58 est une zone de l'écran 14 tactile matérialisée par un cercle. L'appui dans la zone délimitée par le cercle permet la sélection de l'élément graphique 30, 32, 34, 36, 38 associé.

En variante, les moyens de sélections 50, 52, 54, 56, 58 sont des molettes de défilement (souvent désigné sous le terme anglais « scroller »).

Selon une autre variante, les moyens de sélections 50, 52, 54, 56, 58 sont des boutons.

Selon l'exemple de la figure 1, le moyen de production 16 d'éléments sonores comprend une unité 60 de synthèse vocale et un haut-parleur 62.

Les quatre touches 18, 20, 22, 24 sont distinctes des moyens de sélection 50, 52, 54, 56, 58.

Selon l'exemple de la figure 2, les touches 18, 20, 22, 24 sont des zones de l'écran 14 tactile.

Selon une variante, les touches 18, 20, 22, 24 sont des boutons.

La première touche 18 se présente sous la forme d'une zone tactile dans laquelle est représentée une flèche orientée vers le bord latéral gauche 46. La première touche 18 est uniquement présente dans le deuxième mode M2.

La deuxième touche 20 se présente sous la forme d'une zone tactile dans laquelle est représentée une flèche orientée vers le bord latéral droit 48. La deuxième touche 20 est uniquement présente dans le deuxième mode M2.

La troisième touche 22 se présente sur l'interface graphique 12 sous la forme d'une zone tactile dans laquelle est représenté un signe distinctif pour les personnes malvoyantes. Par exemple, le signe distinctif est un logo avec des couleurs contrastées facilitant sa vision. La troisième touche 22 est présente dans les deux modes M1 et M2.

La quatrième touche 24 se présente sur l'interface graphique 12 sous la forme d'une zone tactile dans laquelle est représenté un haut-parleur. La quatrième touche 24 est uniquement présente dans le deuxième mode M2.

Les quatre touches 18, 20, 22, 24 sont organisées selon un bandeau 59 de navigation.

Le bandeau 59 de navigation est accolé au bord inférieur 44 de l'écran 14 Ainsi, les quatre touches 18, 20, 22, 24 sont accolées au bord inférieur 44 de l'écran 14.

La deuxième touche 20 est à la fois accolée au bord inférieur 44 de l'écran 14 et le bord latéral 48 droit.

La première touche 18 est placée adjacente à la deuxième touche 20.

La troisième touche 22 est à la fois accolée au bord inférieur 44 de l'écran 14 et le bord latéral 46 gauche.

Cette localisation des touches 18, 20, 22, 24 permet à l'utilisateur de localiser les touches 18, 20, 22, 24 en suivant les bords de l'écran 14 avec ses mains.

Les deux marquages 26, 28 sont sous la forme d'autocollant.

Le premier marquage 26 est un autocollant en braille expliquant le principe général du deuxième mode M2 de contrôle.

Le deuxième marquage 28 est un autocollant avec des marques tactiles permettant d'aider l'utilisateur à localiser les touches 18, 20, 22, 24.

L'automate 10 comporte également un contrôleur adapté à mettre en œuvre un procédé de contrôle de l'automate 10 de distribution.

Les fonctionnalités associées aux quatre touches 18, 20, 22, 24 sont maintenant décrites.

Dans l'exemple présenté, chaque touche 18, 20, 22, 24 a deux fonctionnalités selon la durée de l'appui sur la touche.

Pour une durée d'appui inférieure à un seuil prédéterminé, une première fonctionnalité est associée à l'appui sur la touche 18, 20, 22, 24. Un tel appui sera qualifié d'« appui bref » dans la suite de la description.

Pour une durée d'appui supérieure à un seuil prédéterminé, une deuxième fonctionnalité est associée à l'appui sur la touche 18, 20, 22, 24. Un tel appui sera qualifié d'« appui prolongé » dans la suite de la description.

Un appui bref sur la première touche 18 permet de sélectionner l'élément graphique 30, 32, 34, 36, 38 qui suit, selon l'ordre de défilement, l'élément graphique sélectionné 30, 32, 34, 36, 38. Par exemple, si le troisième élément graphique 34 est sélectionné, l'appui bref sur la première touche 18 permet de sélectionner le quatrième élément graphique 36.

Dans l'exemple présenté, l'ensemble d'éléments graphiques 30, 32, 34, 36, 38 est cyclique. Cela signifie que lors d'un appui bref sur la première touche 18 alors que l'élément graphique sélectionné est le cinquième élément graphique 38, l'élément graphique sélectionné devient le premier élément graphique 30.

Un appui bref sur la deuxième touche 20 permet de sélectionner l'élément graphique 30, 32, 34, 36, 38 qui précède, selon l'ordre de défilement, l'élément graphique 30, 32, 34, 36, 38. Par exemple, si le troisième élément graphique 34 est sélectionné, l'appui bref sur la deuxième touche 20 permet de sélectionner le deuxième élément graphique 32.

Comme, dans l'exemple présenté, l'ensemble d'éléments graphiques sélectionnables est cyclique, lors d'un appui bref sur la deuxième touche 20 alors que l'élément graphique sélectionné est le premier élément graphique 30, l'élément graphique sélectionné devient le cinquième élément graphique 38.

Un appui prolongé sur la première touche 18 permet de sélectionner directement le premier élément graphique 30.

Un appui prolongé sur la deuxième touche 20 permet de sélectionner directement le dernier élément graphique, soit le cinquième élément graphique 38.

Un appui bref sur la troisième touche 22 permet la validation de la sélection d'un élément graphique 30, 32, 34, 36, 38.

Un appui prolongé sur la troisième touche 22 permet le passage du premier mode M1 de contrôle au deuxième mode M2 de contrôle.

Un appui bref sur la quatrième touche 24 permet la répétition d'un son émis.

Un appui prolongé sur la quatrième touche 24 permet l'activation d'outils informatiques modifiant l'apparence de l'interface graphique 12 pour faciliter la visualisation de l'interface graphique 12.

Par exemple, l'interface graphique 12 est affichée de manière agrandie (effet loupe). A titre d'illustration, la police de caractère est augmentée d'un facteur 2 ou 3. De préférence, le facteur d'agrandissement ainsi que la zone de l'interface graphique 12 sur laquelle s'applique l'agrandissement sont configurables.

En variante, le contraste de l'affichage de l'interface graphique 12 sur l'écran 14 tactile est augmenté. Une telle augmentation du contraste est, par exemple, obtenue en inversant les couleurs ou en appliquant un filtre.

Selon une autre variante, en présence d'une souris, c'est l'affichage du pointeur associé à la souris qui est modifié sur l'écran 14 tactile. Notamment, la taille du pointeur et le contraste du pointeur par rapport au reste de l'interface graphique 12 sont augmentés.

Le fonctionnement de l'automate 10 de distribution est maintenant décrit pour la sélection d'une demande de billet de 40 euros à l'automate 10.

L'utilisateur normal contrôle l'interface graphique 12 dans le premier mode M1 de contrôle.

En voyant que le deuxième moyen de sélection 52 est associé à l'élément graphique de demande de 40 euros, l'utilisateur appuie sur le deuxième moyen de sélection 52.

La sélection de la demande de 40 euros est obtenue.

Le fonctionnement de l'automate 10 pour un utilisateur malvoyant est différent.

L'utilisateur malvoyant appuie avec un appui bref sur la troisième touche 22, ce qui permet de passer dans le deuxième mode M2 de contrôle.

Le bandeau 59 de navigation apparaît alors et l'utilisateur peut appuyer sur la première touche 18, la deuxième touche 20 et la quatrième touche 24.

Le deuxième mode M2 n'inhibe pas le premier mode M1. Cela signifie que dans le deuxième mode M2, l'utilisateur malvoyant est libre d'utiliser les moyens de sélection 50, 52, 54, 56, 58 ou les touches 18, 20, 22, 24. Notamment, l'utilisateur peut activer un outil pour faciliter sa visualisation de l'interface graphique 12 par un appui prolongé sur la quatrième touche 24.

A titre d'illustration, dans la suite, nous supposons que l'utilisateur est suffisamment handicapé pour ne pas être capable d'utiliser le premier mode M1 de contrôle.

Dans le deuxième mode M2 de contrôle, un ensemble d'éléments sonores (voix ou signaux) est émis.

Les éléments sonores permettent de pallier le fait que l'utilisateur ne voit pas ou voit mal l'écran 14.

Chaque élément sonore correspond à la lecture d'un texte. En ce sens, un élément sonore est une instruction sonore.

Ce texte est relatif au contenu des éléments graphiques 30, 32, 34, 36, 38 de l'interface graphique 12 ou à des données de la fenêtre qui est affichée par l'écran 14.

Selon les cas, le texte est statique ou dynamique.

Un texte dynamique est un texte incluant la lecture d'une variable. A titre d'exemple de texte dynamique, on peut citer le texte « le prix total est de X Euros » où X est une variable dépendant de la sélection de l'utilisateur.

L'unité 60 de synthèse vocale permet de transformer un texte en commande du haut-parleur 62 pour émettre de la parole artificielle. Dans l'exemple présenté, l'outil de synthèse vocale permet notamment de changer la voix de la parole artificielle afin de s'adapter aux différents accents des utilisateurs, de changer la hauteur, la vitesse et le volume de la voix afin de s'adapter au bruit ambiant, d'inclure la lecture de caractères spéciaux comme les signes monétiques ou les ponctuations ou encore d'inclure du texte phonétique pour prendre en compte des prononciations spécifiques.

Appliqué à l'exemple présenté, lors d'un accès à la fenêtre de la figure 1, une description de la fenêtre affichée sur l'écran 14 est automatiquement émise. Par exemple, le texte « Veuillez sélectionner le montant souhaité : 20 euros, 40 euros, 60 euros, 80 euros ou 100 euros » est émis.

Automatiquement, le premier élément graphique 30 se sélectionne. Lors de la sélection d'un élément graphique pendant un temps prédéterminé, une description du contenu de l'élément graphique 30, 32, 34, 36, 38 est émise. De ce fait, les mots « 20 euros » sont émis par le haut-parleur 62.

Le temps prédéterminé est choisi pour que la navigation parmi les éléments graphiques 30, 32, 34, 36, 38 reste fluide en n'émettant les descriptions du contenu des éléments graphiques 30, 32, 34, 36, 38 qu'en cas de besoin de l'utilisateur.

De préférence, lorsque cela est pertinent, comme c'est le cas dans cet exemple puisque les éléments graphiques 30, 32, 34, 36, 38 sont organisés selon une seule liste, les éléments sonores peuvent être interrompus par l'utilisateur par appui sur la première touche 18 ou la deuxième touche 20. Cela permet que les éléments sonores apportent une aide à l'utilisateur sans le gêner. Une utilisation restreinte des éléments sonores permet d'éviter la surinformation.

L'utilisateur appuie alors sur la première touche 18 d'un appui bref pour sélectionner l'élément graphique de demande de 40 euros.

De ce fait, les mots « 40 euros » sont émis par le haut-parleur 62.

L'utilisateur appuie alors d'un appui bref sur la troisième touche 22.

Par exemple, le haut-parleur 62 émet alors les mots « Votre demande a bien été enregistrée et est en cours de traitement ».

Le deuxième mode M2 de contrôle n'est actif que pendant le temps de l'opération. Une fois les billets associés à la somme de 40 euros récupérés, le deuxième mode M2 de contrôle n'est plus actif.

La désactivation du deuxième mode M2 de contrôle peut aussi être mise en œuvre à l'aide d'une temporisation. Au bout d'une durée prédéterminée durant laquelle aucun appui sur les quatre touches 18, 20, 22, 24 n'a été détecté, le deuxième mode M2 de contrôle est désactivé.

Ainsi, l'automate 10 de distribution est contrôlable à la fois par un utilisateur normal et un utilisateur malvoyant ou non-voyant. L'automate 10 de distribution n'est pas discriminatoire à l'encontre du handicap de l'utilisateur.

Le deuxième mode M2 de contrôle est un mode de contrôle simplifié par rapport au premier mode M1 de contrôle puisque le nombre de touches est inférieur au nombre de moyens de sélection et permet de manière centralisée l'accès à l'intégralité de l'interface graphique 12. Cette simplification rend ce mode de contrôle bien adapté pour un utilisateur malvoyant ou non-voyant.

En outre, la disposition des touches 18, 20, 22, 24 permet un positionnement du pouce gauche de l'utilisateur pour la validation et du pouce droit pour la sélection. Ceci est usuellement mieux adapté pour un utilisateur malvoyant ou non-voyant.

La présence des instructions orales permet à l'utilisateur de connaître le contenu de l'interface graphique 12 sans la lire.

Le procédé de contrôle proposé est indépendant du fonctionnement en mode normal de l'interface graphique 12. Notamment, la complexité de l'interface graphique 12 et le nombre de moyens de sélection 50, 52, 54, 56, 58 ne sont pas pris en compte. De ce fait, le procédé de contrôle peut être mis en œuvre sur tout type d'automate 10 par une simple modification du logiciel associé à l'interface graphique 12. Les moyens de sélection 50, 52, 54, 56, 58 restent inchangés.

Selon une variante, l'automate 10 comporte uniquement deux touches au lieu des quatre touches 18, 20, 22, 24, une des deux touches servant pour la sélection de l'élément graphique désiré par défilement et l'autre touche servant pour la confirmation de validation de la sélection.

En variante, au lieu d'un contrôle à l'aide des quatre touches 18, 20, 22, 24, dans le deuxième mode M2 de contrôle, le contrôle de l'interface graphique 12 se fait à l'aide d'un joystick.

Selon une autre variante, au lieu d'un contrôle à l'aide des quatre touches 18, 20, 22, 24, dans le deuxième mode M2 de contrôle, le contrôle de l'interface graphique 12 se fait par réception de commandes vocales émises par l'utilisateur de l'automate 10 de distribution.

Cette réception est mise en œuvre à l'aide d'un microphone recevant les instructions de l'utilisateur non-voyant.

Pour le défilement des éléments graphiques sélectionnables 30, 32, 34, 36, 38, l'utilisateur non-voyant utilise les commandes vocales « précédent » et « suivant ». Pour la validation de la sélection d'un élément graphique 30, 32, 34, 36, 38, l'utilisateur non-voyant peut utiliser la commande vocale « validation ».

Ainsi, à l'aide de trois commandes vocales, l'utilisateur non-voyant est capable d'utiliser l'interface graphique 12 de l'automate 10 de distribution.

En variante, le deuxième mode M2 est constamment présent ce qui évite d'avoir à basculer entre les premier et deuxième modes M1 et M2.

Selon encore une autre variante, le procédé est un exécutable séparé de l'interface graphique 12 ou une librairie compilable avec l'interface graphique 12.

En outre, la disposition des touches 18, 20, 22, 24 permet un positionnement du pouce gauche de l'utilisateur pour la validation et du pouce droit pour la sélection. Ceci est usuellement mieux adapté pour un utilisateur malvoyant ou non-voyant.

La présence des instructions orales permet à l'utilisateur de connaître le contenu de l'interface graphique 12 sans la lire.

Le procédé de contrôle proposé est indépendant du fonctionnement en mode normal de l'interface graphique 12. Notamment, la complexité de l'interface graphique 12 et le nombre de moyens de sélection 50, 52, 54, 56, 58 ne sont pas pris en compte. De ce fait, le procédé de contrôle peut être mis en œuvre sur tout type d'automate 10 par une simple modification du logiciel associé à l'interface graphique 12. Les moyens de sélection 50, 52, 54, 56, 58 restent inchangés.

Selon une variante, l'automate 10 comporte uniquement deux touches au lieu des quatre touches 18, 20, 22, 24, une des deux touches servant pour la sélection de l'élément graphique désiré par défilement et l'autre touche servant pour la confirmation de validation de la sélection.

En variante, au lieu d'un contrôle à l'aide des quatre touches 18, 20, 22, 24, dans le deuxième mode M2 de contrôle, le contrôle de l'interface graphique 12 se fait à l'aide d'un joystick.

Selon une autre variante, au lieu d'un contrôle à l'aide des quatre touches 18, 20, 22, 24, dans le deuxième mode M2 de contrôle, le contrôle de l'interface graphique 12 se fait par réception de commandes vocales émises par l'utilisateur de l'automate 10 de distribution.

Cette réception est mise en œuvre à l'aide d'un microphone recevant les instructions de l'utilisateur non-voyant.

Pour le défilement des éléments graphiques sélectionnables 30, 32, 34, 36, 38, l'utilisateur non-voyant utilise les commandes vocales « précédent » et « suivant ». Pour la validation de la sélection d'un élément graphique 30, 32, 34, 36, 38, l'utilisateur non-voyant peut utiliser la commande vocale « validation ».

Ainsi, à l'aide de trois commandes vocales, l'utilisateur non-voyant est capable d'utiliser l'interface graphique 12 de l'automate 10 de distribution.

En variante, le deuxième mode M2 est constamment présent ce qui évite d'avoir à basculer entre les premier et deuxième modes M1 et M2.

Selon encore une autre variante, le procédé est un exécutable séparé de l'interface graphique 12 ou une librairie compilable avec l'interface graphique 12.

## Revendications

1. Procédé de contrôle d'un automate (10) de distribution ou de commande, l'automate (10) ayant une pluralité de fonctionnalités et comprenant :
- une interface graphique (12) comprenant au moins deux éléments graphiques sélectionnables (30, 32, 34, 36, 38), la sélection d'un élément graphique activant une fonctionnalité de l'automate (10) associée à l'élément graphique,
- une pluralité de moyens de sélection (50, 52, 54, 56, 58) des au moins deux éléments graphiques sélectionnables (30, 32, 34, 36, 38),
- une pluralité de moyens auxiliaires de commande (18, 20, 22, 24) de l'interface graphique (12) comportant :
- une commande de défilement de la sélection des éléments graphiques sélectionnables (30, 32, 34, 36, 38), et
- une commande de validation de la sélection d'un élément graphique sélectionnable (30, 32, 34, 36, 38)
le procédé comprenant les étapes de :
- émission d'un ensemble d'éléments sonores par l'automate (10), les éléments sonores étant relatifs aux éléments graphiques sélectionnables (30, 32, 34, 36, 38) de l'interface graphique (12),
- contrôle de l'interface graphique (12) par utilisation d'au moins une commande de la pluralité de moyens auxiliaires de commande (18, 20, 22, 24) de l'interface graphique (12),
l'émission d'un ensemble d'éléments sonores par l'automate (10) étant mise en œuvre après la sélection d'un des éléments graphiques sélectionnables (30, 32, 34, 36, 38) de l'interface graphique (12) pendant un temps prédéterminé, et le procédé comportant en outre les étapes de :
- sélection d'un élément graphique sélectionnable (30, 32, 34, 36, 38) par utilisation de la commande de validation et
- émission d'un élément sonore relatif à l'élément graphique (30, 32, 34, 36, 38) sélectionné.

2. Procédé selon la revendication 1, dans lequel l'interface graphique (12) est propre à fonctionner selon un premier mode (M1) de contrôle et un deuxième mode (M2) de contrôle avec émission d'éléments sonores,
le procédé comprenant dans le premier mode (M1) de contrôle les étapes de :
- contrôle de l'interface graphique (12) par appui sur au moins un moyen de sélection (50, 52, 54, 56, 58),
le procédé comprenant dans le deuxième mode (M2) de contrôle les étapes de :
- émission d'un ensemble d'éléments sonores par l'automate (10), les éléments sonores étant relatifs aux éléments graphiques sélectionnables (30, 32, 34, 36, 38) de l'interface graphique (12),
- contrôle de l'interface graphique (12) par utilisation d'au moins une commande de la pluralité de moyens auxiliaires de commande (18, 20, 22, 24) de l'interface graphique (12),
le passage du premier mode (M1) de contrôle au deuxième mode (M2) de contrôle étant mis en œuvre par utilisation d'un moyen auxiliaire de commande de la pluralité de moyens auxiliaires de commande (18, 20, 22, 24).

3. Procédé selon la revendication 2, dans lequel le passage du premier mode (M1) de contrôle au deuxième mode (M2) de contrôle n'inhibe pas le premier mode (M1) de contrôle.

4. Procédé selon l'une quelconque des revendications 1 à 3, dans lequel les moyens auxiliaires de commande de l'interface graphique sont une pluralité de touches (18, 20, 22, 24) comportant une première touche (18), une deuxième touche (20) et une troisième touche (22), les première touche (18) et deuxième touche (20) étant des commandes de défilement de la sélection des éléments graphiques sélectionnables et la troisième touche (22) étant une commande de validation de la sélection d'un élément graphique sélectionnable (30, 32, 34, 36, 38).

5. Procédé selon l'une quelconque des revendications 1 à 3, dans lequel la commande de validation est une commande vocale émise par l'utilisateur.

6. Procédé selon la revendication 4 ou 5, dans lequel l'interface graphique (12) est propre à fonctionner selon un premier mode (M1) de contrôle et un deuxième mode (M2) de contrôle avec émission d'éléments sonores,
le procédé comprenant dans le premier mode (M1) de contrôle les étapes de :
- contrôle de l'interface graphique (12) par appui sur au moins un moyen de sélection (50, 52, 54, 56, 58),
le procédé comprenant dans le deuxième mode (M2) de contrôle les étapes de :
- émission d'un ensemble d'éléments sonores par l'automate (10), les éléments sonores étant relatifs aux éléments graphiques sélectionnables (30, 32, 34, 36, 38) de l'interface graphique (12),
- contrôle de l'interface graphique (12) par utilisation d'au moins une commande de la pluralité de moyens auxiliaires de commande (18, 20, 22, 24) de l'interface graphique (12),
le passage du premier mode (M1) de contrôle au deuxième mode (M2) de contrôle étant mis en œuvre par utilisation d'un moyen auxiliaire de commande de la pluralité de moyens auxiliaires de commande (18, 20, 22, 24),
le passage du premier mode (M1) de contrôle au deuxième mode (M2) de contrôle étant mis en œuvre par appui sur la troisième touche (22).

7. Procédé selon la revendication 4, dans lequel l'automate (10) comprend un écran (14) d'affichage de l'interface graphique (12) avec un bord inférieur (44), un bord supérieur (42) et deux bords latéraux (46, 48), les trois touches (18, 20, 22) étant accolées à un bord de l'écran (14).

8. Procédé selon l'une quelconque des revendications 1 à 7, dans lequel l'automate (10) comprend un écran (14) d'affichage de l'interface graphique (12) avec un bord inférieur (44), un bord supérieur (42) et deux bords latéraux (46, 48) et les moyens auxiliaires de commande comprennent une touche (24) permettant l'activation d'outils informatiques modifiant l'apparence de l'interface graphique (12) pour faciliter la visualisation de l'interface graphique (12), la touche (24) étant accolée au bord inférieur (44).

9. Procédé selon l'une quelconque des revendications 1 à 8, dans lequel le procédé comporte l'activation d'outils informatiques modifiant l'apparence de l'interface graphique (12) pour faciliter la visualisation de l'interface graphique (12) par utilisation d'un moyen auxiliaire de commande (24) de la pluralité de moyens auxiliaires de commande (18, 20, 22, 24).

10. Procédé selon l'une quelconque des revendications 1 à 9, dans lequel les commandes de défilement et de validation sont des commandes vocales émises par l'utilisateur.

11. Procédé selon l'une quelconque des revendications 1 à 10, dans lequel le nombre de moyens auxiliaires de commande (18, 20, 22, 24) est strictement inférieur au nombre de moyens de sélection (50, 52, 54, 56, 58).

12. Automate (10) de distribution ou de commande ayant une pluralité de fonctionnalités et comprenant :
- une interface graphique (12) comprenant au moins deux éléments graphiques sélectionnables (30, 32, 34, 36, 38), la sélection d'un élément graphique activant une fonctionnalité de l'automate (10) associée à l'élément graphique,
- une pluralité de moyens de sélection (50, 52, 54, 56, 58) des au moins deux éléments graphiques sélectionnables (30, 32, 34, 36, 38),
- une pluralité de moyens auxiliaires de commande (18, 20, 22, 24) de l'interface graphique (12) comportant :
- une commande de défilement de la sélection des éléments graphiques sélectionnables (30, 32, 34, 36, 38), et
- une commande de validation de la sélection d'un élément graphique sélectionnable (30, 32, 34, 36, 38),
- un contrôleur (64) adapté à la mise en œuvre du procédé de contrôle selon l'une quelconque des revendications 1 à 11.

## Patentansprüche

1. Verfahren zum Steuern eines Verkaufs- oder Bestellautomaten (10), wobei der Automat (10) eine Mehrzahl von Funktionalitäten aufweist und umfasst:
eine grafische Schnittstelle (12), die mindestens zwei auswählbare grafische Elemente (30, 32, 34, 36, 38) umfasst, wobei die Auswahl eines grafischen Elements eine dem grafischen Element zugeordnete Funktionalität des Automaten (10) aktiviert,
eine Mehrzahl von Auswahlmitteln (50, 52, 54, 56, 58) der mindestens zwei auswählbaren grafischen Elemente (30, 32, 34, 36, 38),
eine Mehrzahl von Steuerhilfsmitteln (18, 20, 22, 24) der grafischen Schnittstelle (12), aufweisend:
einen Befehl zum Scrollen durch die Auswahl auswählbarer grafischer Elemente (30, 32, 34, 36, 38) und
einen Befehl zum Bestätigen der Auswahl eines auswählbaren grafischen Elements (30, 32, 34, 36, 38)
wobei das Verfahren die Schritte umfasst:
Aussenden eines Satzes von Tonelementen durch den Automaten (10), wobei sich die Tonelemente auf die auswählbaren grafischen Elemente (30, 32, 34, 36, 38) der grafischen Schnittstelle (12) beziehen,
Steuern der grafischen Schnittstelle (12) unter Verwendung mindestens eines der mehreren Hilfsmittel (18, 20, 22, 24) zum Steuern der grafischen Schnittstelle (12),
wobei das Aussenden eines Satzes von Tonelementen durch den Automaten (10) nach der Auswahl eines der auswählbaren grafischen Elemente (30, 32, 34, 36, 38) der grafischen Schnittstelle (12) für eine vorbestimmte Zeit durchgeführt wird, und das Verfahren außerdem die Schritte aufweist:
Auswählen eines auswählbaren grafischen Elements (30, 32, 34, 36, 38) durch Verwendung des Bestätigungsbefehls und
Aussenden eines Tonelementes, das sich auf das ausgewählte grafische Element (30, 32, 34, 36, 38) bezieht.

2. Verfahren nach Anspruch 1, bei dem die grafische Schnittstelle (12) geeignet ist, gemäß einem ersten Steuermodus (M1) und einem zweiten Steuermodus (M2) mit einem Aussenden von Tonelementen zu arbeiten,
wobei das Verfahren in dem ersten Steuermodus (M1) die folgenden Schritte umfasst:
Steuern der grafischen Schnittstelle (12) durch Drücken auf mindestens ein Auswahlmittel (50, 52, 54, 56, 58),
wobei das Verfahren in dem zweiten Steuermodus (M2) die Schritte umfasst:
Aussenden eines Satzes von Tonelementen durch den Automaten (10), wobei sich die Tonelemente auf die auswählbaren grafischen Elemente (30, 32, 34, 36, 38) der grafischen Schnittstelle (12) beziehen,
Steuern der grafischen Schnittstelle (12) unter Verwendung mindestens eines der mehreren Hilfsmittel (18, 20, 22, 24) zum Steuern der grafischen Schnittstelle (12),
wobei das Umschalten vom ersten Steuermodus (M1) in den zweiten Steuermodus (M2) unter Verwendung eines Steuerhilfsmittels aus der Mehrzahl von Steuerhilfsmitteln (18, 20, 22, 24) durchgeführt wird.

3. Verfahren nach Anspruch 2, bei dem das Umschalten vom ersten Steuermodus (M1) in den zweiten Steuermodus (M2) den ersten Steuermodus (M1) nicht sperrt.

4. Verfahren nach einem beliebigen der Ansprüche 1 bis 3, bei dem die Hilfsmittel zum Steuern der graphischen Schnittstelle eine Mehrzahl von Tasten (18, 20, 22, 24) sind, die eine erste Taste (18), eine zweite Taste (20) und eine dritte Taste (22) aufweist, wobei die erste Taste (18) und die zweite Taste (20) Befehle zum Scrollen der Auswahl auswählbarer graphischer Elemente sind und die dritte Taste (22) ein Befehl zum Bestätigen der Auswahl eines auswählbaren graphischen Elements (30, 32, 34, 36, 38) ist.

5. Verfahren nach einem der Ansprüche 1 bis 3, bei dem der Bestätigungsbefehl ein von der Benutzerperson abgegebener Sprachbefehl ist.

6. Verfahren nach Anspruch 4 oder 5, bei dem die grafische Schnittstelle (12) geeignet ist, gemäß einem ersten Steuermodus (M1) und einem zweiten Steuermodus (M2) mit einem Aussenden von Tonelementen zu arbeiten,
wobei das Verfahren in dem ersten Steuermodus (M1) die folgenden Schritte umfasst:
Steuern der grafischen Schnittstelle (12) durch Drücken auf mindestens ein Auswahlmittel (50, 52, 54, 56, 58),
wobei das Verfahren in dem zweiten Steuermodus (M2) die Schritte umfasst:
Aussenden eines Satzes von Tonelementen durch den Automaten (10), wobei sich die Tonelemente auf die auswählbaren grafischen Elemente (30, 32, 34, 36, 38) der grafischen Schnittstelle (12) beziehen,
Steuern der grafischen Schnittstelle (12) unter Verwendung mindestens eines der mehreren Hilfsmittel (18, 20, 22, 24) zum Steuern der grafischen Schnittstelle (12),
wobei das Umschalten vom ersten Steuermodus (M1) in den zweiten Steuermodus (M2) unter Verwendung eines Steuerhilfsmittels aus der Mehrzahl von Steuerhilfsmitteln (18, 20, 22, 24) durchgeführt wird,
wobei das Umschalten vom ersten Steuermodus (M1) in den zweiten Steuermodus (M2) durch Drücken auf die dritte Taste (22) durchgeführt wird.

7. Verfahren nach Anspruch 4, bei dem der Automat (10) einen Bildschirm (14) zur Darstellung der grafischen Schnittstelle (12) mit einem unteren Rand (44), einem oberen Rand (42) und zwei seitlichen Rändern (46, 48) aufweist, wobei die drei Tasten (18, 20, 22) an einem Rand des Bildschirms (14) angebracht sind.

8. Verfahren nach einem beliebigen der Ansprüche 1 bis 7, bei dem der Automat (10) einen Bildschirm (14) zur Darstellung der graphischen Schnittstelle (12) mit einem unteren Rand (44), einem oberen Rand (42) und zwei seitlichen Rändern (46, 48) umfasst und die Steuerhilfsmittel eine Taste (24) umfassen, die die Aktivierung von Softwarewerkzeugen ermöglicht, die das Erscheinungsbild der graphischen Schnittstelle (12) verändern, um die Visualisierung der graphischen Schnittstelle (12) zu erleichtern, wobei die Taste (24) an dem unteren Rand (44) angebracht ist.

9. Verfahren nach einem beliebigen der Ansprüche 1 bis 8, bei dem das Verfahren das Aktivieren von Softwarewerkzeugen aufweist, die das Erscheinungsbild der grafischen Schnittstelle (12) zur Erleichterung der Visualisierung der grafischen Schnittstelle (12) durch Verwenden eines Steuerhilfsmittels (24) der Mehrzahl von Steuerhilfsmitteln (18, 20, 22, 24) verändern.

10. Verfahren nach einem beliebigen der Ansprüche 1 bis 9, bei dem die Befehle zum Scrollen und Bestätigen Sprachbefehle sind, die von der Benutzerperson abgegeben werden.

11. Verfahren nach einem der beliebigen Ansprüche 1 bis 10, bei dem die Anzahl der Steuerhilfsmittel (18, 20, 22, 24) strikt geringer ist als die Anzahl der Auswahlmittel (50, 52, 54, 56, 58).

12. Verkaufs- oder Bestellautomat (10), der eine Mehrzahl von Funktionalitäten aufweist und umfasst:
eine grafische Schnittstelle (12), die mindestens zwei auswählbare grafische Elemente (30, 32, 34, 36, 38) umfasst, wobei die Auswahl eines grafischen Elements eine dem grafischen Element zugeordnete Funktionalität des Automaten (10) aktiviert,
eine Mehrzahl von Auswahlmitteln (50, 52, 54, 56, 58) der mindestens zwei auswählbaren grafischen Elemente (30, 32, 34, 36, 38),
eine Mehrzahl von Steuerhilfsmitteln (18, 20, 22, 24) der grafischen Schnittstelle (12), aufweisend:
einen Befehl zum Scrollen durch die Auswahl auswählbarer grafischer Elemente (30, 32, 34, 36, 38) und
einen Befehl zum Bestätigen der Auswahl eines auswählbaren grafischen Elements (30, 32, 34, 36, 38),
eine Steuervorrichtung (64), die zum Durchführen des Steuerverfahrens nach einem der Ansprüche 1 bis 11 geeignet ist.

## Claims

1. A method for controlling an automatic distribution or command machine (10), the automatic machine (10) having a plurality of functionalities and comprising:
- a graphic interface (12) comprising at least two selectable graphic elements (30, 32, 34, 36, 38), the selection of a graphic elements activating a functionality of the automatic machine (10) associated with the graphic element,
- a plurality of selection means (50, 52, 54, 56, 58) for at least two selectable graphic elements (30, 32, 34, 36, 38),
- a plurality of auxiliary means (18, 20, 22, 24) for controlling the graphic interface (12) including:
- a command for scrolling the selection of selectable graphic elements (30, 32, 34, 36, 38), and
- a command for validating the selection of one selectable graphic element (30, 32, 34, 36, 38)
the method comprising the steps:
- emitting a set of sound elements by the automatic machine (10), the sound elements relating to the selectable graphic elements (30, 32, 34, 36, 38) of the graphic interface (12),
- controlling the graphic interface (12) by using at least one command of the plurality of auxiliary control means (18, 20, 22, 24) of the graphic interface (12),
the emitting of a set of sound elements by the automatic machine (10) being applied after selecting one of the selectable graphic elements (30, 32, 34, 36, 38) of the graphic interface for a predetermined time,
and the method further including the steps:
- selecting a selectable graphic element (30, 32, 34, 36, 38) by using a validation command and
- emitting a sound elements relating to the selected graphic element (30, 32, 34, 36, 38).

2. The method according to claim 1, wherein the graphic interface (12) is able to operate according to a first control mode is able to operate according to a first control mode (M1) and to a second control mode (M2) with emission of sound elements,
the method comprising in the first control mode (M1) the steps:
- controlling the graphic interface (12) by pressing on at least one selection means (50, 52, 54, 56, 58),
the method comprising in the second control mode (M2) the steps:
- emitting a set of sound elements by the automatic machine (10), the sound elements relating to the selectable graphic elements (30, 32, 34, 36, 38) of the graphic interface (12),
- controlling the graphic interface (12) by using at least one command of a plurality de auxiliary means (18, 20, 22, 24) for controlling the graphic interface (12),
passing from the first control mode (M1) to the second control mode (M2) being applied by using an auxiliary control means of the plurality of auxiliary control means (18, 20, 22, 24).

3. The method according to claim 2, wherein passing from the first control mode (M1) to the second control mode (M2) does not inhibit the first control mode (M1).

4. The method according to any one of claims 1 to 3, wherein the auxiliary means for controlling the graphic interface are a plurality of keys (18, 20, 22, 24) including a first key (18), a second key (20) and a third key (22), the first key (18) and second key (20) being commands for scrolling the selection of the selectable graphic elements and the third key (22) being a command for validating the selection of a selectable graphic element (30, 32, 34, 36, 38).

5. The method according to any one of claims 1 to 3, wherein the validation command is a voice command emitted by the user.

6. The method according to claim 4 or 5, wherein the graphic interface (12) is able to operate according to a first control mode (M1) and to a second control mode (M2) with emission of sound elements,
the method comprising in the first control mode (M1) the steps:
- controlling the graphic interface (12) by pressing on at least one selection means (50, 52, 54, 56, 58),
the method comprising in the second control mode (M2) the steps:
- emitting a set of sound elements by the automatic machine (10), the sound elements relating to the selectable graphic elements (30, 32, 34, 36, 38) of the graphic interface (12),
- controlling the graphic interface (12) by using at least one command of a plurality de auxiliary means (18, 20, 22, 24) for controlling the graphic interface (12),
passing from the first control mode (M1) to the second control mode (M2) being applied by using an auxiliary control means of the plurality of auxiliary control means (18, 20, 22, 24),
passing from the first control mode (M1) to the second control mode (M2) is applied by pressing on the third key (22).

7. The method according to claim 4, wherein the automatic machine (10) comprises a screen (14) for displaying the graphic interface (12) with a lower edge (44), an upper edge (42) and two side edges (46, 48), the three keys (18, 20, 22) being a placed adjacent to an edge of the screen (14).

8. The method according to any one of claims 1 to 7, wherein the automatic machine (10) comprises a screen (14) for displaying the graphic interface (12) with a lower edge (44), an upper edge (42) and two side edges (46, 48) and the auxiliary control means comprise a key (24) allowing activation of computer tools modifying the appearance of the graphic interface (12) in order to facilitate viewing of the graphic interface (12), the key (24) being adjacent to the lower edge (44).

9. The method according to any one of claims 1 to 8, wherein the method includes the activation of computer tools modifying the appearance of the graphic interface (12) in order to facilitate viewing of the graphic interface (12) by using an auxiliary control means (24) of the plurality of auxiliary control means (18, 20, 22, 24).

10. The method according to any one of claims 1 to 9, wherein the scrolling and validation commands are voice commands emitted by the user.

11. The method according to any one of claims 1 to 10, wherein the number of auxiliary control means (18, 20, 22, 24) is strictly less than the number of selection means (50, 52, 54, 56, 58).

12. An automatic distribution or command machine (10) having a plurality of functionalities and comprising:
- a graphic interface (12) comprising at least two selectable graphic elements (30, 32, 34, 36, 38), the selection of a graphic elements activating a functionality of the automatic machine (10), associated with the graphic element,
- a plurality of means (50, 52, 54, 56, 58) for selecting at least two selectable graphic elements (30, 32, 34, 36, 38),
- a plurality of auxiliary means (18, 20, 22, 24) for controlling the graphic interface (12) including:
- a command for scrolling the selection of the selectable graphic elements (30, 32, 34, 36, 38), and
- a command for validating the selection of a selectable graphic element (30, 32, 34, 36, 38),
- a controller (64) adapted to carrying out the method for controlling according to anyone of claims 1 to 11.
